# EUROPÄISCHE PATENTSCHRIFT

(11) **EP 2 854 283 B1**
(45) Veröffentlichungstag und Bekanntmachung des Hinweises auf die Patenterteilung: **30.08.2017**
(21) Anmeldenummer: 14003265.7
(22) Anmeldetag: 20.09.2014
(51) Int. Cl.: H02P 3/18, H02P 3/22

(54) **Verfahren zum Bremsen eines elektrischen Antriebsmotors**
Method for braking an electric drive motor
Procédé de freinage d'un moteur d'entraînement électrique

(30) Priorität: 28.09.2013 DE 102013016216
(43) Veröffentlichungstag der Anmeldung: 01.04.2015
(73) Patentinhaber: Andreas Stihl AG & Co. KG, 71336 Waiblingen (DE)
(72) Erfinder: Kischka, Claudius, Dr., D-71522 Backnang (DE); Trinkle, Simon, D-73667 Kaisersbach (DE); Neubauer, Andreas, D-71554 Weissach im Tal (DE); Liebhard, Gernot, D-71332 Waiblingen (DE); Wichert, René, D-73568 Durlangen (DE)
(74) Vertreter: Wasmuth, Rolf

(56) Entgegenhaltungen:
- EP-A2- 0 508 367
- EP-A2- 2 387 143
- GB-A- 1 601 463
- JP-A- H07 184 393
- US-A1- 2004 183 490

## Beschreibung

Die Erfindung betrifft ein Verfahren zum Bremsen eines elektrischen Antriebsmotors aus einem Stator und einem Rotor nach dem Oberbegriff des Anspruchs 1.

Elektrische Antriebsmotoren, insbesondere Gleichstrommotoren (DC-Motor) oder bürstenlose Gleichstrommotoren (EC-Motor) sind als elektrischer Antrieb für ein Werkzeug eines handgeführten Arbeitsgerätes bekannt. Derartige tragbare Arbeitsgeräte können Bohrmaschinen, Akkuschrauber, Motorkettensägen, Trennschleifer, Blasgeräte, Freischneider, Heckenscheren oder dgl. Arbeitsgeräte sein.

Zum Betrieb eines bürstenlosen elektronisch kommutierten, dreiphasigen Gleichstrommotors (BEC-Motor/Brushless Electronically Commutated Motor oder nur EC-Motor/Electronically Commutated Motor) ist eine elektronische Steuereinheit für eine Ansteuerschaltung notwendig, über die die Phasenanschlüsse des Stators bestromt werden, um ein den Rotor des Gleichstrommotors antreibendes Drehfeld zu erzeugen. Eine derartige Ansteuerschaltung ist in der DE 10 2010 020 215 A1 beschrieben und besteht vorzugsweise aus elektronischen Leistungsschaltern wie MOSFET's oder dgl. Die Umschaltung der Bestromung des Stators von ersten Phasenanschlüssen auf nächste Phasenanschlüsse erfolgt in Anhängigkeit der Stellung des Rotors, die durch geeignete Maßnahmen festzustellen ist. Häufig werden Magnetfeldsensoren, sogenannte Hallsensoren zur Erkennung der Rotorstellung eingesetzt, die auf das Magnetfeld des drehenden Rotors ansprechen und ein Ausgangssignal abgeben. Werden z. B. drei Hallsensoren über den Umfang des Stators angeordnet, kann die Steuereinheit durch Auswertung der Ausgangssignale der Hallsensoren die Drehlage des Rotors ausreichend genau erkennen und eine der Drehlage angepasste Bestromung der zugeordneten Feldspule bewirken.

Handgeführte, tragbare Arbeitsgeräte wie z.B. Motorkettensägen benötigen zum raschen Stillsetzen des Werkzeugs, z. B. der Sägekette, eine Sicherheitsbremseinrichtung, wie sie z. B. in der DE 10 2007 024 170 A1 beschrieben ist. Derartige Sicherheitsbremseinrichtungen sind auf der Abtriebsseite des Antriebs angeordnet und sollen ein rasches Stillsetzen des Werkzeugs gewährleisten. Wird die Sicherheitsbremseinrichtung ausgelöst, wird das Werkzeug im Bereich von etwa 120 msec bis zum Stillstand abgebremst.

Werden elektrische Antriebsmotoren in handgeführten, tragbaren Arbeitsgeräten eingesetzt, z. B. in Motorsägen, werden auch elektrische Bremssysteme genutzt, wie die DE 35 30 685 C2 belegt. Der antreibende Elektromotor kann durch Kurzschließen seiner Feldspulen zwar abgebremst werden, die dabei erzielbaren Bremszeiten sind jedoch unbefriedigend und können eine Sicherheitsbremseinrichtung nicht ersetzen. Daher sind weiterhin die als Bandbremsen ausgeführten Sicherheitsbremseinrichtungen notwendig, um ein Abbremsen des Werkzeugs im Zeitbereich von etwa 120 msec zu erreichen.

Werden handgeführte, tragbare Arbeitsgeräte als Akkugeräte ausgeführt, ergibt sich durch den notwendigen Akkupack ein hohes Gesamtgewicht des Arbeitsgerätes; die zum raschen Stillsetzen notwendigen zusätzlichen Bremseinrichtungen erhöhen dieses Gewicht weiter, da die Sicherheitsbremseinrichtungen konstruktiv aufwendig und schwer sind.

Der Erfindung liegt die Aufgabe zugrunde, ein Verfahren zum Bremsen eines elektronisch kommutierten Elektromotors anzugeben, mit dem bei geringem technischen Aufwand sehr kurze Bremszeiten zu erzielen sind.

Die Aufgabe wird nach den kennzeichnenden Merkmalen des Anspruchs 1 gelöst.

Zum Bremsen des Rotors eines elektronisch kommutierten Antriebsmotors werden die elektronischen Schalter genutzt, über die die Phasenanschlüsse der drei Motorphasen zum Antreiben des Rotors mit der Spannungsquelle verbunden werden. Nach der Erfindung wird der elektrische Antriebsmotor von der antreibenden Spannung getrennt und zum Bremsen des Rotors in vorgegebener zeitlicher Abfolge über die elektronischen Schalter jeweils zwischen zwei Phasenanschlüssen der Feldspulen ein Phasenkurzschluss geschaltet, während ein weiterer Phasenanschluss offen bleibt. Die über die Schalter kurzgeschlossenen Phasenanschlüsse werden dabei jeweils entsprechend der Drehlage des Rotors ausgewählt, und zwar derart, dass immer die Feldspule kurzgeschlossen wird, in der die durch den drehenden Rotor induzierte Spannung ihr Maximum durchläuft.

Erfindungsgemäß ist somit vorgesehen, die Phasenanschlüsse der Motorphasen nicht permanent kurzzuschließen, sondern - in Abhängigkeit von der Drehlage des Rotors - nur über jeweils zwei Phasenanschlüsse für einen begrenzten elektrischen Drehwinkel des Rotors einen Phasenkurzschluss zu schalten, was als gesteuerter Kurzschluss bezeichnet wird. Überraschend hat sich gezeigt, dass durch diese Maßnahme des gesteuerten Kurzschlusses die Bremszeit eines mehrphasigen elektrischen Antriebsmotors insbesondere aus hohen Drehzahlen signifikant gesenkt werden kann. Bei einem dreiphasigen Antriebsmotor konnten aus hohen Drehzahlen von ca. 10.000 Umdrehungen pro Minute Bremszeiten erzielt werden, die signifikant kleiner sind als im Vergleich zu Bremszeiten mit einem sogenannten harten Kurzschluss, bei dem alle drei Phasenanschlüsse während der gesamten Bremsung bleibend kurzgeschlossen sind. Aus Drehzahlen von 10.000 Umdrehungen pro Minute wurden bei einem dreiphasigen Antriebsmotor Bremszeiten bis zum Stillstand des Rotors gemessen, die um bis zu 50% niedriger liegen als bei einem harten Kurzschluss.

Darüber ist bei dem erfindungsgemäßen gesteuerten Kurzschluss eines mehrphasigen Motors die Strombelastung der Spulen und der elektronischen Komponenten im Mittel geringer als bei einem harten Kurzschluss. Der erfindungsgemäße gesteuerte Kurzschluss führt somit bei geringerer Strombelastung des Antriebsmotors und der steuernden elektronischen Komponenten zu signifikant kürzeren Bremszeiten.

Durch die erfindungsgemäße Kommutierung von Feldspule auf Feldspule immer dann, wenn eine Feldspule im Bereich des Maximums der induzierten Spannung liegt, wird über eine elektrische Umdrehung ein in den Feldspulen fließender Bremsstrom erzeugt, der überwiegend ausschließlich verzögernde Drehmomente generiert und den Rotor rasch abbremst. Vorteilhaft wird immer die Feldspule kurzgeschlossen, deren Induktionsspannung nach etwa 40° bis 70° elektrischer Winkel einen Nulldurchgang durchlaufen hat. Eine guter Kompromiss aus niedrigen Bremszeiten und verträglicher Strombelastung der Bauteile wird erreicht, wenn jeweils die Feldspule des mehrphasigen Motors kurzgeschlossen wird, deren Induktionsspannung nach etwa 60° elektrischer Winkel einen Nulldurchgang durchlaufen hat.

Die Umschaltung von einem ersten Phasenkurzschluss an der ersten Feldspule auf einen nächsten Phasenkurzschluss einer entgegen der Drehrichtung des Rotors folgenden Feldspule erfolgt vorzugsweise nach jeweils 60° des elektrischen Winkels. Damit wird erreicht, dass eine Feldspule über einen elektrischen Drehwinkel von 30° vor einem Maximum der induzierten Spannung bis zu einem elektrischen Drehwinkel von 30° nach einem Maximum der induzierten Spannung kurzgeschlossen ist.

In einer bevorzugten Ausführung der Erfindung sind zur Erzeugung eines Drehfeldes in einem Dreiphasenmotor drei Feldspulen vorgesehen, die elektrisch miteinander verbunden sind und über Schalter an eine Versorgungsspannung anzuschließen sind.

Bei einem dreiphasigen Antriebsmotor wird eine Bremsung dadurch ausgeführt, dass in einem ersten Schritt die Phasenanschlüsse einer ersten Feldspule über zugeordnete Schalter kurzgeschlossen werden, so dass ein Bremsstrom über die erste Feldspule fließt und die zweite und die dritte Feldspulen als Reihenschaltung parallel zur ersten Feldspule liegen. In einem zweiten Schritt werden die Phasenanschlüsse einer entgegen der mechanischen Drehrichtung des Rotors folgenden zweiten Feldspule über zugeordnete Schalter kurzgeschlossen, so dass ein Bremsstrom über die zweite Feldspule fließt und die dritte und die erste Feldspulen als Reihenschaltung parallel zur zweiten Feldspule liegen. In einem dritten Schritt werden die Phasenanschlüsse entgegen der Drehrichtung des Rotors folgenden dritten Feldspule über zugeordnete Schalter kurzgeschlossen, so dass ein Bremsstrom über die dritte Feldspule fließt und die erste und die zweite Feldspulen als Reihenschaltung parallel zur dritten Feldspule liegen. Diese drei Schritte werden sequenziell wiederholt, und zwar so lange, bis eine vorgegebene untere Grenzdrehzahl des Rotors erreicht ist.

Über eine elektrische Umdrehung des Rotors ist vorgesehen, jede Feldspule eines mehrphasigen, insbesondere dreiphasigen Motors zweimal kurzzuschließen.

Jeder Phasenanschluss einer Feldspule wird einmal über Schalter zur High Side einer Versorgungsspannung und einmal über Schalter zur Low Side der Versorgungsspannung verbunden. Über eine elektrische Umdrehung des Rotors werden die Phasenanschlüsse einer jeden Feldspule einmal über die Schalter der Low Side und einmal über die Schalter der High Side kurzgeschlossen.

Ein dreiphasiger Elektromotor mit hoher Leistung wird dadurch erzielt, dass die Feldspulen des Stators in einer elektrischen Dreieckschaltung zusammengeschaltet werden. Zwischen je zwei Feldspulen ist so ein Phasenanschluss des dreiphasigen Elektromotors ausgebildet. Wird ein Phasenkurzschluss über zwei Phasenanschlüsse einer ersten Feldspule geschaltet, liegen die weiteren Feldspulen in einer Reihenschaltung parallel zur ersten Feldspule. Dadurch fließt nicht nur in der kurzgeschlossenen Feldspule ein Bremsstrom, sondern auch in der Reihenschaltung der weiteren Feldspulen, wobei dieser Stromanteil jedoch kleiner ist als der Bremsstrom in der kurzgeschlossenen Feldspule.

Durch das erfindungsgemäße Bremsverfahren ist ein rasches Abbremsen des Rotors bis auf dessen Stillstand zu erzielen.

In einfacher Ausgestaltung der Erfindung wird die Drehlage des Rotors über Sensoren festgestellt, zweckmäßig über Hallsensoren. In Weiterbildung der Erfindung kann die Drehlage des Rotors aber auch sensorlos, insbesondere über die Größe und/oder den Verlauf der in den Feldspulen induzierten elektrischen Spannung festgestellt werden. Alternativ ist die Drehlage des Rotors auch durch eine Auswertung der durch Induktion auftretenden Induktionsströme möglich.

In Weiterbildung der Erfindung wird das erfindungsgemäße Verfahren als Sicherheitsbremseinrichtung zum Stillsetzen des durch einen elektrischen Antriebsmotor angetriebenen Werkzeugs in einem Arbeitsgerät, insbesondere in einem tragbaren, handgeführten Arbeitsgerät eingesetzt. Auf eine mechanische Sicherheitsbremseinrichtung kann dann verzichtet werden. Dieses tragbare, handgeführte Arbeitsgerät ist insbesondere eine Motorkettensäge, ein Trennschleifer oder eine Heckenschere.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Darstellung einen bürstenlosen Gleichstrommotor (EC-Motor) mit elektronischer Steuereinheit zur Kommutierung,
- Fig. 2: eine schematische Darstellung eines dreiphasigen EC-Motors in einer ersten Rotorstellung,
- Fig. 3: eine schematische Darstellung eines dreiphasigen EC-Motors gemäß Fig. 2 in einer in Drehrichtung um 30° weiter gedrehten Rotorstellung,
- Fig. 4: eine schematische Darstellung eines dreiphasigen EC-Motors gemäß Fig. 3 mit einer in Drehrichtung um weitere 30° gedrehten Rotorstellung,
- Fig. 5: eine schematische Darstellung eines dreiphasigen EC-Motors gemäß Fig. 4 mit einer um weitere 30° gedrehten Rotorstellung,
- Fig. 6: eine schematische Darstellung eines dreiphasigen EC-Motors gemäß Fig. 5 mit einer um weitere 90° gedrehten Rotorstellung,
- Fig. 7: eine schematische Darstellung der in einer Feldspule eines dreiphasigen EC-Motors auftretenden Induktionsspannung über 360° elektrischer Winkel,
- Fig. 8: die bei einer Rotordrehung auftretenden Ausgangssignale von Hallsensoren und die in den Spulen induzierten Spannungen mit einer Logiktabelle für einen gesteuerten Kurzschluss,
- Fig. 9: eine schematische Darstellung der Spulenströme bei einem Phasenkurzschluss vor und nach einer Kommutierung von einer ersten Feldspule auf eine in Drehrichtung folgende Feldspule,
- Fig. 10: eine schematische Darstellung der in den Feldspulen induzierten elektrischen Spannung,
- Fig. 11: eine schematische Darstellung des elektrischen Rotorwinkels, der auftretenden Spulenströme sowie des sich daraus ergebenden Gesamtmomentes bei einem gesteuerten Kurzschluss mit erfindungsgemäßer Kommutierung,
- Fig. 12: eine schematische Anordnung der Feldspulen des Stators eines EC-Motors in Sternschaltung,
- Fig. 13: in schematischer Darstellung eine Motorkettensäge mit einer erfindungsgemäßen Bremsschaltung zum Abbremsen des Werkzeugs,
- Fig. 14: ein Diagramm der Bremszeiten über der Drehzahl zum Vergleich eines harten Kurzschlusses und eines gesteuerten Kurzschlusses,
- Fig. 15: in schematischer Darstellung eine Heckenschere mit einer erfindungsgemäßen Bremsschaltung zum Abbremsen des Antriebsmotors und des Werkzeugs.

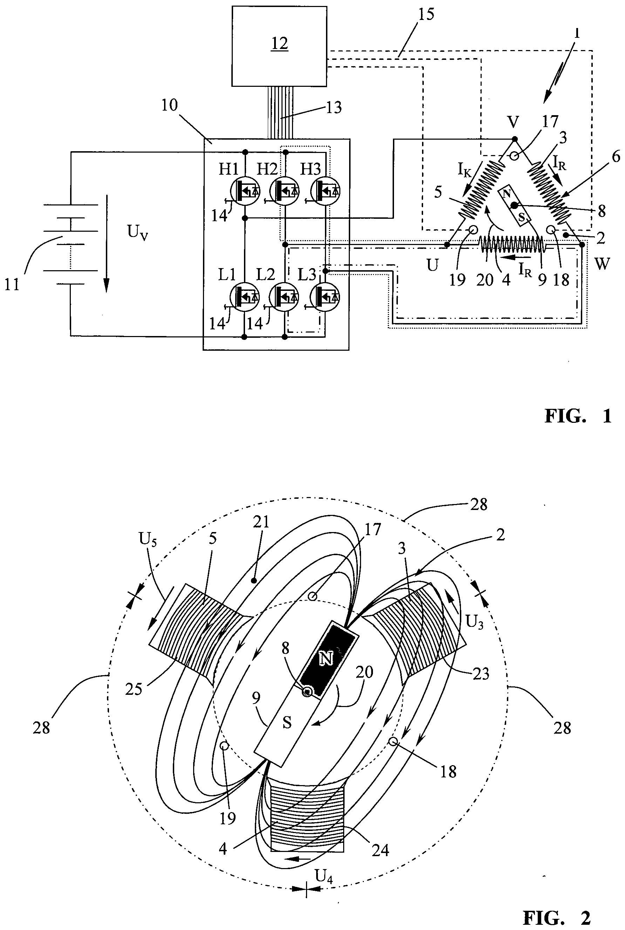

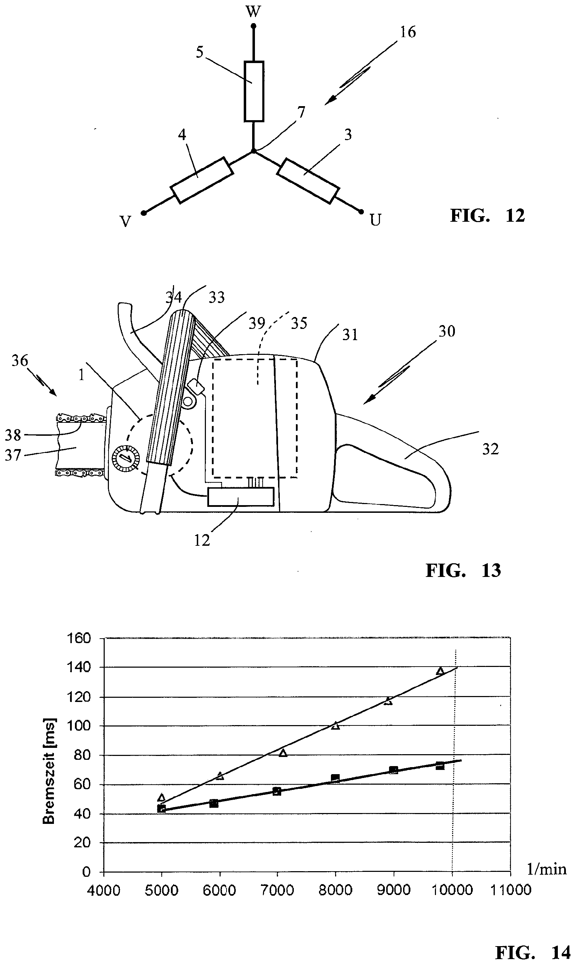

In Fig. 1 ist schematisch ein elektronisch kommutierter Elektromotor 1 dargestellt, der als sogenannter Brushless Electronically Commutated Motor (BEC-Motor) oder Electronically Commutated Motor (EC-Motor) ausgebildet sein kann. Ein derartiger elektronisch kommutierter Elektromotor 1 besteht aus einem Stator 2 mit Feldspulen 3, 4, 5, die im Ausführungsbeispiel elektrisch als Dreieckschaltung 6 geschaltet sind. In dieser Dreieckschaltung 6 sind die Spulenenden benachbarter Feldspulen 3, 4, 5 elektrisch miteinander verbunden, wobei zwischen je zwei Feldspulen 3, 4, 5 der Spulenanordnung elektrische Phasenanschlüsse U, V und W ausgebildet sind. Die Erfindung wird nachfolgend anhand der Dreieckschaltung 6 erläutert; wie in Fig. 12 schematisch gezeigt, können die Feldspulen 3, 4, 5 auch in Form einer sogenannten Sternschaltung 16 miteinander verbunden sein. Bei einer Sternschaltung sind drei Spulenenden zu einem gemeinsamen Sternpunkt 7 verbunden; die verbleibenden Spulenanschlüsse der Feldspulen 3, 4, 5 bilden die Phasenanschlüsse U, V, W der Sternschaltung 16.

Dem Stator 2 ist ein Rotor 9 zugeordnet, der um eine Drehachse 8 dreht. Im schematisch dargestellten Ausführungsbeispiel ist der Rotor 9 in seiner einfachsten Bauart in Form eines zweipoligen Permanentmagneten mit einem Nordpol N und einem Südpol S wiedergegeben.

Der Rotor 9 kann als im Stator 2 laufender Rotor ausgebildet sein (Innenläufer); der Rotor 9 kann auch topfförmig gestaltet sein und die Anordnung der auf Polen 23, 24, 25 (Fig. 2) des Stators 2 gewickelten Feldspulen 3, 4, 5 übergreifen. Ein derartig aufgebauter Elektromotor 1 ist ein sogenannter Außenläufer.

Der Rotor 9 wird in einem durch die Feldspulen 3, 4, 5 erzeugten Drehfeld drehend angetrieben. Hierzu ist erforderlich, das von der Anordnung der Feldspulen 3, 4, 5 gebildete Drehfeld in Drehrichtung 20 des Rotors 9 fortschreitend weiterzuschalten. Dies erfolgt bei dem dargestellten bürstenlosen Gleichstrommotor durch eine elektronische Kommutierung, wozu die Phasenanschlüsse U, V und W der Anordnung der Feldspulen 3, 4, 5 über eine Stelleinheit 10 in einer vorgegebenen Abfolge mit einer Versorgungsspannung U_{V} beaufschlagt sind. Die Versorgungsspannung U_{V} wird von einer Spannungsquelle 11 als Gleichspannung bereitgestellt. Die Spannungsquelle 11 ist vorzugsweise ein Akku, z. B. ein chemisch auf Lithium basierter Akku, der die Versorgungsspannung U_{V} zum Betrieb des Elektromotors 1 bereitstellt.

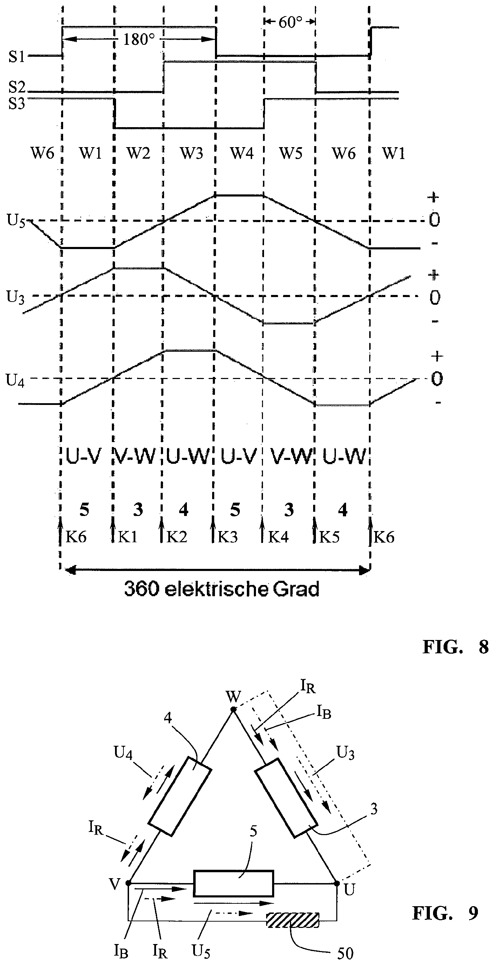

Die Stelleinheit 10 weist eine Vielzahl von MOSFET's H1, H2, H3, L1, L2, L3 als Leistungsschalter auf, über die jeder Phasenanschluss U, V, W der Anordnung der Feldspulen 3, 4, 5 wechselweise mit dem Pluspol (High Side) der Versorgungsspannung U_{V} und mit dem Minuspol (Low Side) der Versorgungsspannung U_{V} verbunden werden kann. Die MOSFET's H1, H2, H3, L1, L2, L3 werden über eine Steuereinheit 12 angesteuert, die bevorzugt einen Mikroprozessor umfasst. Die Steuereinheit 12 ist hierzu über Steuerleitungen 13 mit den jeweiligen Steueranschlüssen 14 der MOSFET's H1, H2, H3, L1, L2, L3 verbunden. Der Steuereinheit 12 sind ferner über Sensorleitungen 15 die Ausgangssignale S1, S2, S3 (Fig. 8) von Hallsensoren 17, 18, 19 zugeführt, die über den Umfang des Stators mit Abstand zueinander angeordnet sind und auf das Magnetfeld des drehenden Rotors 9 ansprechen. Über die Ausgangssignale S1, S2, S3 (Fig. 8) der Hallsensoren 17, 18, 19 kann die Steuereinheit 12 die Drehlage des Rotors 9 erkennen und entsprechend der Drehlage des Rotors 9 die MOSFET's H1, H2, H3, L1, L2, L3 steuern.

Um z. B. an die Phasenanschlüsse U und V eine Drehmoment bildende Kommutatorspannung anzulegen, werden die MOSFET's H1 und L2 durchgeschaltet, so dass sich über die Feldspule 5 ein Drehmoment bildender Kommutatorstrom I_{K} ausbilden kann. Der Kommutatorstrom I_{K} über die Feldspule 5 ist mit einem Pfeil angedeutet; über die beiden parallel zur bestromten Feldspule 5 liegenden Feldspulen 3 und 4 fließt ein halb so großer Strom I_{R}.

Über die Hallsensoren 17, 18, 19 wird ein Weiterdrehen des Rotors 9 in Drehrichtung 20 erkannt, um dann entsprechend der Drehlage des Rotors 9 winkelgerecht auf die Feldspule 3 mit den Phasenanschlüssen V, W umzuschalten. Auf diese Weise wird ein jeweils der Drehlage des Rotors 9 entsprechendes, antreibendes Drehfeld erzeugt.

Sind alle MOSFET's H1, H2, H3, L1, L2, L3 im Sperrzustand, die Leistungsschalter also offen, wird von außen an die Phasenanschlüsse U, V, W keine antreibende Spannung angelegt. Rotiert der Rotor 9 in Drehrichtung 20 weiter, werden die Feldspulen 3, 4, 5 je nach Drehlage des Rotors 9 von dessen Magnetfeld 21 durchsetzt. Der die Spulen 3, 4, 5 durchsetzende magnetische Fluss des rotierenden Permanentmagneten induziert in einer Spule eine Induktionsspannung U_{I}, deren Größe abhängig ist von der Änderung der Flussdichte pro Zeiteinheit.

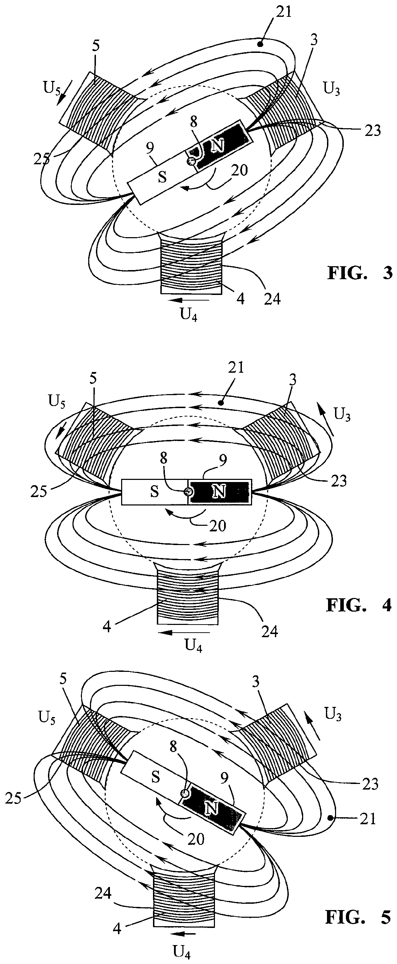

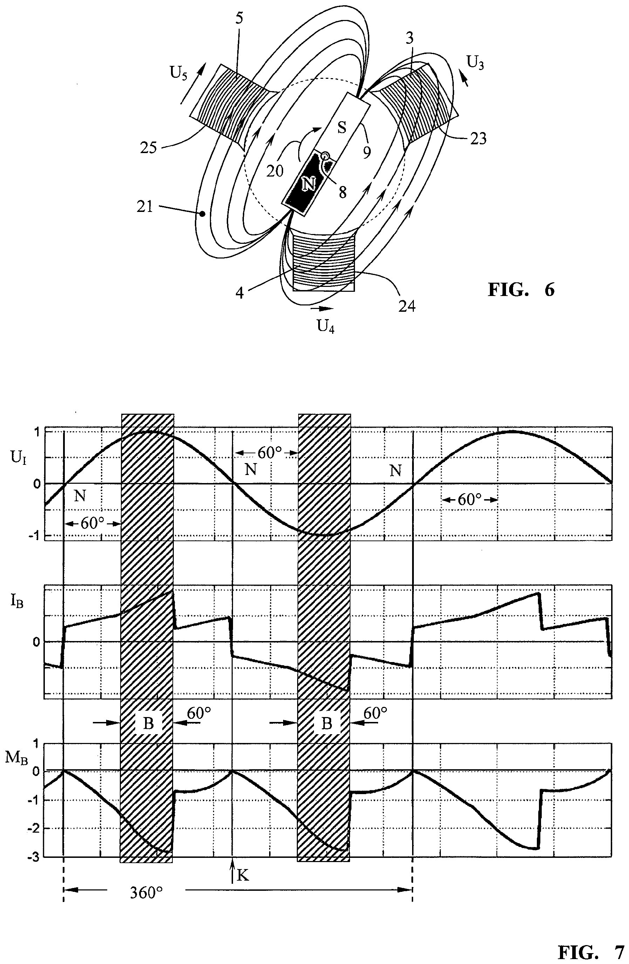

In den Figuren 2 bis 6 ist ein Stator 2 mit Polen 23, 24 und 25 schematisch wiedergegeben, die über den Umfang des Stators 2 mit einem gleichen Umfangswinkel 28 zueinander beabstandet liegen. Jeder Pol 23, 24, 25 trägt eine Feldspule 3, 4, 5, die im Ausführungsbeispiel elektrisch in einer Dreieckschaltung 6 (Fig. 1) miteinander verbunden sind. In der Rotorstellung nach Fig. 2 ist die Flussdichte in der Feldspule 5 am größten und wird - bei Weiterdrehung des Rotors 9 - von der Position in Fig. 2 in die Position nach Fig. 5 auf einen minimalen Wert absinken bzw. einen Nulldurchgang haben. In Fig. 3 bewirkt der um 30° weiter gedrehte Rotor 9, dass die in der Feldspule 3 induzierte Spannung U₃ einen Nulldurchgang hat, während die induzierte Spannung U₅ absinkt und die Spannung U₄ anwächst. Bei einer Weiterdrehung des Rotors 9 um weitere 30° gemäß Fig. 4 steht in der Feldspule 4 eine maximale induzierte Spannung U₄ an, während die induzierte Spannung U₅ weiter abgesunken ist und die induzierte Spannung U₃ weiter anwächst, also größer wird. In Fig. 5 hat die in der Feldspule 5 induzierte Spannung U₅ einen Nulldurchgang, während die induzierte Spannung U₃ weiter anwächst und die induzierte Spannung U₄ weiter abgesunken ist. Bei Weiterdrehung des Rotors 9 in Drehrichtung 20 steigt die induzierte Spannung U₅ wieder bis auf ein Maximum (Fig. 6) an, jedoch hat nun die Polarität der induzierten Spannung U₅ gewechselt bzw. gedreht, da aufgrund des ausgeführten Drehwinkels von 180° und der gewechselten Lage von Südpol S und Nordpol N die Feldlinien des Magnetfeldes 21 die Feldspule 5 um 180° gedreht durchsetzen. In Fig. 9 verlaufen die die Feldspule 5 durchsetzenden Feldlinien des Magnetfeldes 20 in Drehrichtung 20 des Rotors; in Fig.2 verlaufen die die Feldspule 5 durchsetzenden Feldlinien des Magnetfeldes 20 entgegen der Drehrichtung 20 des Rotors.

Wird nun gemäß dem erfindungsgemäßen Verfahren zum Bremsen des Rotors 9 immer die Feldspule 3, 4, 5 kurzgeschlossen, in der die durch den drehenden Rotor 9 induzierte Spannung U₃, U₄, U₅ ihr Maximum durchläuft, so würde in Fig. 2 die Feldspule 5 und in Fig. 4 die Feldspule 4 kurzgeschlossen werden. In Fig. 6 würde dann wiederum die Feldspule 5 kurzgeschlossen werden.

In Fig. 7 ist der Verlauf der Induktionsspannung U_{I} bezogen auf die Spannung U₅ in der Feldspule 5 gemäß den Figuren 2 bis 6 wiedergegeben, und zwar über 360° elektrischer Winkel. Wird die Feldspule 5 in der Stellung des Rotors 9 nach Fig. 2 kurzgeschlossen, führt die Induktionsspannung U_{I} zu einem positiven Bremsstrom I_{B}, der zu einem entsprechenden Bremsmoment M_{B} führt.

Wechselt die Induktionsspannung U_{I} die Polarität, führt dies zu einem entsprechenden negativen Bremsstrom I_{B}, wobei beim Wechsel der induzierten Spannung vom positiven in den negativen Bereich, also im Nulldurchgang kommutiert wird (Kommutierung K), damit der Strom durch die Feldspule 5 während des Bremsens kein positives Moment, also kein antreibendes Moment erzeugen kann.

Nach dem erfindungsgemäßen Verfahren, das auch als "gesteuerter Kurzschluss" bezeichnet werden kann, erfolgt somit eine rotorpositionsabhängige Kommutierung K, um das Problem der Phasenverschiebung zwischen dem Bremsstrom I_{B} in einer Feldspule 3, 4, 5 und der in einer Feldspule3, 4, 5 induzierten Spannung U₃, U₄, U₅ auszugleichen. Durch die erfindungsgemäße Kommutierung K muss der Bremsstrom I_{B} mit der induzierten elektrischen Spannung U₃, U₄, U₅ in Phase gebracht werden. Dies bedeutet, dass immer dann, wenn der elektrische Winkel der Induktionsspannung in einer Feldspule einen Nulldurchgang hat, auch der Bremsstrom durch die Feldspule einen Nulldurchgang in die gleiche Richtung aufweisen muss, damit der Spulenstrom keine antreibenden Momente während der Bremsung des Rotors erzeugen kann. Dies ist in Fig. 6 durch die durchgezogenen senkrechten Linien wiedergegeben, die jeweils eine Kommutierung K anzeigen.

Um den Rotor des Elektromotors 1 anzutreiben, wird in Abhängigkeit von der Drehlage des Rotors 9 über die MOSFET's H1, H2, H3, L1, L2, L3 der Stelleinheit 10 an die jeweiligen Phasenanschlüsse U, V, W der Feldspulen 3, 4, 5 eine Versorgungsspannung Uv angelegt. Da der drehende Rotor 9 in den Feldspulen 3, 4, 5 eine Spannung induziert, muss die angelegte Versorgungsspannung U_{V} größer sein als die durch den rotierenden Rotor 9 in den Feldspulen 3, 4, 5 erzeugte Induktionsspannung. Diese der Versorgungsspannung entgegengerichtete Induktionsspannung U_{I} wird auch als BEMF Spannung (Back Electromotive Force) bezeichnet. Ist die Versorgungsspannung U_{V} größer als die BEMF Spannung, ergibt sich an der jeweiligen Feldspule eine antreibende Spannung U_{A}. Mit steigender Drehzahl des Rotors wächst die Induktionsspannung U_{I}; hat sich die Induktionsspannung U_{I} der angelegten Versorgungsspannung angenähert, liegt die maximale Drehzahl des Elektromotors vor. Soll zum Bremsen des Rotors 9 die Induktionsspannung U_{I} genutzt werden, wird die Feldspule von der Versorgungsspannung U_{V} getrennt und die Feldspule kurzgeschlossen, so dass die in der Feldspule auftretende Induktionsspannung als Bremsspannung U_{B} zum Bremsen des Rotors genutzt wird.

Da die Feldspulen eine natürliche Induktion haben und der Strom der Spannung an der Feldspule nacheilt, können sich bei einem Polaritätswechsel der induzierten Spannung und dem dann noch fließenden positiven Strom den Rotor antreibende Drehmomente ergeben, die für eine Bremsung nachteilig sind und die Bremszeit verlängern. Wie in Fig. 7 gezeigt, wird daher durch entsprechende Kommutierung K ein Nulldurchgang des Bremsstroms beim Polaritätswechsel der Induktionsspannung U_{I} erzwungen. Zum Abbremsen des Rotors 9 werden in vorgegebener zeitlicher Abfolge über die als MOSFET's ausgebildeten Schalter jeweils zwei Phasenanschlüsse, z. B. U, V, kurzgeschlossen und der andere Phasenanschluss W offen gehalten. Die Schalter bzw. die MOSFET's H1, H2, H3, L1, L2, L3 der kurzgeschlossenen Phasenanschlüsse werden entsprechend der Drehlage des Rotors 9 so ausgewählt, dass immer die Feldspule 3, 4, 5 kurzgeschlossen ist, in der die durch den drehenden Rotor 9 induzierte Spannung U₃, U₄, U₅ ein Maximum durchläuft.

Die Folge der geschalteten Phasenkurzschlüsse ist in Fig. 8 schematisch wiedergegeben. Die oberen Signale sind die Ausgangssignale S1, S2, S3 der Hallsensoren 17, 18, 19. Jeder Hallsensor 17, 18, 19 ist am Umfang des Stators derart angeordnet, dass er über 120° elektrischen Winkel ein Ausgangssignal S1, S2, S3 abgibt. Über den Umfang eines Stators sind drei Hallsensoren 17, 18, 19 angeordnet, die derart zueinander versetzt liegen, dass zu keinem Winkelabschnitt von 60° alle drei Hallsensoren 17, 18, 19 ein gleiches Ausgangssignal U₃, U₄, U₅ abgeben. Dadurch ist die Möglichkeit geschaffen, allein aus dem Zustand der Ausgangssignale S1, S2, S3 der drei Hallsensoren 17, 18, 19 zu erkennen, in welchem Winkelabschnitt W1 bis W6 von 60 Winkelgraden (bezogen auf 360° elektrischer Winkel) der Rotor 9 steht.
Unterhalb der Ausgangssignale der Hallsensoren sind die in den Feldspulen 3, 4, 5 induzierten Spannungen U₃, U_{4,} U₅ wiedergegeben. Jede induzierte Spannung U₃, U₄, U₅ hat über 360° elektrischer Winkel einen etwa sinusähnlichen Verlauf, wobei in einem der Winkelabschnitte W1 bis W6 jedes Signal U₃, U₄, U₅ ein positives bzw. negatives Maximum hat.
Das erfindungsgemäße Verfahren zum gesteuerten Kurzschluss sieht nun vor, dass immer dann, wenn eine Feldspule3, 4, 5 ein Maximum ihrer induzierten Spannung U₃, U₄, U₅ (BEMF-Spannung) durchläuft, eben diese Feldspule3, 4, 5 kurzgeschlossen wird. Liegt z. B. an der Feldspule 5 im Winkelabschnitt W1 eine maximale - negative - Spannung U₅ vor, werden in eben diesem Winkelabschnitt W1 von vorzugsweise 60° elektrischer Winkel die Phasenanschlüsse U und V kurzgeschlossen, also die Feldspule 5 kurzgeschlossen. Eine Kommutierung auf die elektrisch folgende Feldspule 3 mit einem Maximum der Induktionsspannung erfolgt vorzugsweise in dem Moment, wenn die in der Feldspule 3 induzierte Spannung einen vorgegebenen Schwellwert überschreitet, nämlich im Zeitpunkt der Kommutierung K1. In diesem Fall werden die Phasenanschlüsse V - W kurzgeschlossen, so dass die Feldspule 3 kurzgeschlossen ist. Überschreitet die Feldspule 4 ein Maximum ihrer induzierten Spannung U₄, erfolgt nach einem vorgegebenen elektrischen Winkel eine nächste Kommutierung K2 auf die Feldspule 4; die Phasenanschlüsse U - W werden kurzgeschlossen. Nun folgt im Zeitpunkt der Kommutierung K3 wiederum ein Phasenkurzschluss über die Feldspule 5; die Phasenanschlüsse U - V werden kurzgeschlossen, da in dem folgenden Winkelabschnitt W4 das Maximum der induzierten Spannung an der Feldspule 5 auftreten wird. Zur nächsten Kommutierung K4 erfolgt ein Kurzschließen der Feldspule 3 über die Phasenanschlüsse V - W, da im Winkelabschnitt W5 an der Feldspule 3 das Maximum einer induzierten Spannung U₃ durchlaufen wird. Im Zeitpunkt der Kommutierung K5 wird wieder auf die Feldspule 4 umgeschaltet, da im Winkelabschnitt W6 in der Feldspule 4 ein Maximum an - negativer - induzierter Spannung U₄ anliegt. Nach weiteren 60° elektrischer Winkel wird zum Zeitpunkt der Kommutierung K6 wieder auf die Feldspule 5 umgeschaltet, d. h., die Phasenanschlüsse U - V werden kurzgeschlossen. Über 360 elektrische Grad wird somit alle 60° elektrischer Winkel auf eine entgegen der mechanischen Drehrichtung folgende Feldspule umgeschaltet, da aufgrund des drehenden Rotors 9 die maximale induzierte Spannung in der entgegen der mechanischen Drehrichtung folgenden Spule erreicht wird. Über eine elektrische Umdrehung des Rotors 9 wird jede Feldspule 3, 4, 5 zweimal kurzgeschlossen.

Der in der kurzgeschlossenen Feldspule und der - bei einer Dreieckschaltung 6 - in den parallelen Feldspulen fließende Strom bildet einen Bremsstrom, der ein den Rotor ausschließlich verzögerndes Bremsmoment M_{B} erzeugt. Durch die Kommutierung K1 bis K6 wird erreicht, dass die Induktionsspannung U_{I} in einer Feldspule immer in Phase mit dem Bremsstrom in der jeweiligen Feldspule liegt, so dass ausschließlich ein abbremsendes Bremsmoment M_{B} entsteht. Die aufgrund der Induktivität der Spule auftretende Phasenverschiebung zwischen Spannung und Strom kann durch die Kommutierung derart beeinflusst werden, dass ein während des Bremsens ansonsten mögliches, den Rotor beschleunigendes Antriebsmoment minimiert oder weitgehend vermieden wird. Durch eine entsprechende Steuerung kann auch erreicht werden, dass ein während des Bremsens den Rotor beschleunigendes Antriebsmoment unterbunden ist.

In Fig. 9 ist die Kommutierung von der Feldspule 5 auf die Feldspule 3 schematisch wiedergegeben. In einem ersten Zustand ist die Feldspule 5, d. h. die Phasenanschlüsse U und V, kurzgeschlossen. Die in der Feldspule 5 induzierte Spannung U₅ hat ein Maximum; es fließt ein entsprechend großer Bremsstrom I_{B} über die Feldspule 5.

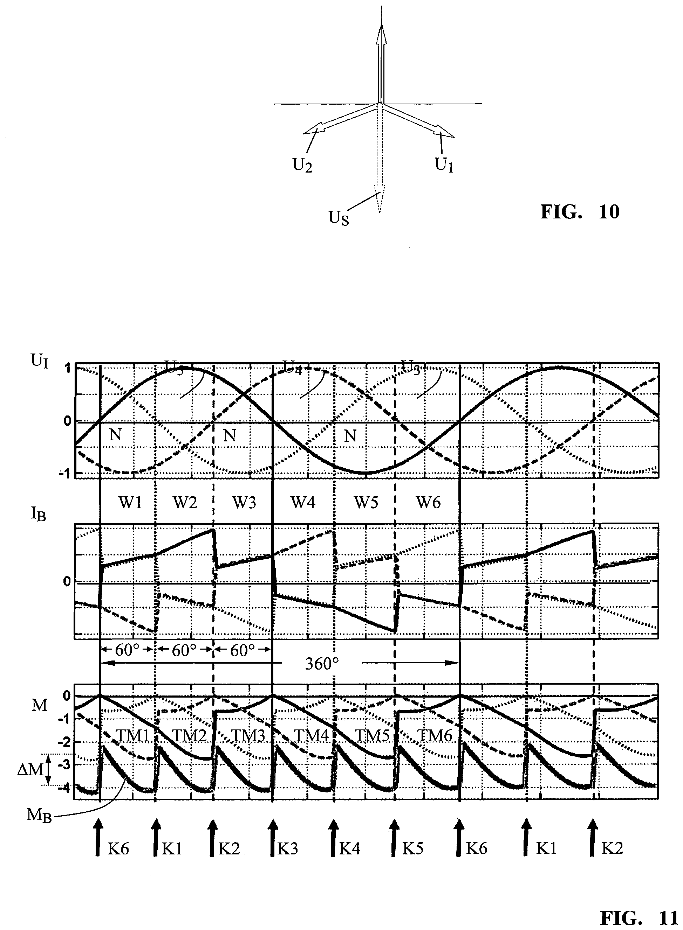

Der Zustand des Phasenkurzschlusses über die Phasenanschlüsse U - V ist in durchgezogenen Linien dargestellt; entsprechend dem Phasenkurzschluss über U - V sind die Feldspulen 3 und 4 als Reihenschaltung der kurzgeschlossenen Feldspule 5 parallel geschaltet. Die in den Feldspulen 3 und 4 induzierten Spannungen U₃ und U₄ summieren sich entsprechend der Darstellung in Fig. 10 entsprechend der räumlichen Anordnung der Feldspulen 3 und 4 zu einer Summenspannung U_{S}, welche einen Strom I_{R} durch die Reihenschaltung bedingt.

Bevor aufgrund der Phasenverschiebung zwischen Spannung und Strom das erzeugte Bremsmoment in ein beschleunigendes Moment kippen kann, wird von der Feldspule 5 auf die Feldspule 3 kommutiert, d. h., der Phasenkurzschluss über die Phasenanschlüsse U - V wird auf die Phasenanschlüsse U - W weitergeschaltet, so dass nach der Kommutierung die Feldspule 3 kurzgeschlossen ist. Dieser Zustand ist in Fig. 9 strichpunktiert wiedergegeben.

Der Bremsstrom I_{B} durch die Feldspule 3 fließt in gleicher Richtung wie der - in der vorliegenden Kommutierung - fließende Strom I_{R} durch die Reihenschaltung. Durch die Kommutierung ändert sich allerdings die Stromrichtung durch die Feldspule 4. Die induzierte Spannung U₄ wechselt die Polarität; entsprechend wechselt die Richtung des Stromflusses des Stroms I_{R} durch die Reihenschaltung der Feldspulen 4 und 5. Dadurch kann ein Kippen des Bremsmomentes in ein kurzzeitig beschleunigendes Moment vermieden werden.

Fig. 11 gibt im obersten Schaubild allgemein die Phasenlage der Induktionsspannung U_{I} als Spannungen U₃, U₄, U₅ aller drei Feldspulen 3, 4, 5 wieder; im Schaubild darunter ist der in den jeweiligen Spulen fließende Bremsstrom I_{B} dargestellt. Darunter ist der sich aus dem Bremsstrom I_{B} ergebende Verlauf des Bremsmomentes M_{B} für jede Spule dargestellt. Induzierte Spannung U_{I}, Bremsstrom I_{B} und resultierendes Moment M einer Feldspule 5 sind in allen drei Darstellungen in durchgezogener Linie wiedergegeben; die Größen der zweiten Feldspule 4 sind strichliert eingezeichnet, und die Größen der dritten Feldspule 3 sind punktiert dargestellt.

Über 360° elektrischer Winkel erfolgt alle 60° eine Kommutierung K1 bis K6 von einer Feldspule auf die nächste Feldspule.

Zunächst ist in einem ersten Winkelabschnitt W1 von 60° die Feldspule 4 kurzgeschlossen (strichlierte Kennlinie), wodurch sich aufgrund des Bremsstroms in der Feldspule 4 ein bremsendes Teilmoment TM1 ergibt, was im unteren Schaubild dargestellt ist. Der erste Winkelabschnitt ist so gewählt, dass die Feldspule 4 etwa 30° vor bis 30° nach dem Maximum der induzierten Spannung U₄ kurzgeschlossen ist. Nach 60° elektrischen Winkelgraden wird mit der Kommutierung K1 der Phasenkurzschluss umgeschaltet auf die Feldspule 5, wodurch sich ein bremsendes Teilmoment TM2 ergibt, wie in der unteren Darstellung angegeben. Nach weiteren 60° elektrischen Winkelgraden wird mit der Kommutierung K2 auf die Feldspule 3 umgeschaltet, wodurch sich ein bremsendes Teilmoment TM3 ergibt. Über die weiteren Kommutierungen K3, K4, K5 und K6 werden wieder die Spulen 4, 5 und 3 nach jeweils 60° elektrischen Winkelgraden kurzgeschlossen. Somit ergibt sich als bremsendes Moment eine über 360 elektrischen Winkelgraden erfolgte Aneinanderreihung der bremsenden Teilmomente TM1 bis TM6. Es wird deutlich, dass die Kommutierung K so gewählt ist, dass immer dann auf eine folgende Feldspule kommutiert wird, wenn deren induzierte Spannung ihr Maximum durchläuft. In der Darstellung in Fig. 7 ist dieser Bereich B schraffiert hervorgehoben. Fig. 7 zeigt auch, dass eine Feldspule immer dann kurzgeschlossen wird, wenn deren induzierte Spannung einen Nulldurchgang durchläuft, und zwar etwa 60° elektrischer Winkel nach einem Nulldurchgang N.

Aufgrund der Dreieckschaltung ergibt sich in den jeweils zur kurzgeschlossenen Feldspule parallel liegenden Reihenschaltung der verbleibenden Feldspule eine Induktionsspannung und ein daraus resultierender Bremsstrom, der zu den bremsenden Teilmomenten addiert wird, wodurch sich eine Erhöhung des Bremsmomentes M_{B} um ΔRM ergibt. Der Momentenverlauf des Bremsmomentes M_{B} ist in der unteren durchgezogenen Linie in Fig. 11 wiedergegeben.

Das erfindungsgemäße Verfahren ist nicht nur bei Feldspulen in Dreieckschaltung, sondern auch bei Feldspulen in Sternschaltung vorteilhaft einsetzbar, so wie in Fig. 12 schematisch dargestellt. Für eine Sternschaltung ergeben sich quantitativ andere Verläufe des bremsenden Momentes; dem Grunde nach ist das erfindungsgemäße Verfahren mit gleichen Vorteilen auch bei einem EC-Motor mit in Sternschaltung angeordneten Feldspulen möglich.

Fig. 13 zeigt in schematischer Darstellung eine Motorkettensäge 30 als Beispiel eines tragbaren, handgeführten Arbeitsgerätes. Die Motorkettensäge 30 besteht aus einem Gehäuse 31, das einen hinteren Handgriff 32 und einen vorderen, das Gehäuse 31 überspannenden Bügelgriff 33 aufweist. Vor dem quer zur Längsachse der Motorkettensäge 30 angeordneten Bügelgriff 33 liegt ein Handschutz 34 als Auslöser für eine Sicherheitsbremseinrichtung.

Im Gehäuse 31 der Motorkettensäge 30 ist ein elektrischer Antriebsmotor, insbesondere ein EC-Motor 1 vorgesehen, der - vgl. Fig. 1 - über eine Steuereinheit 12 gesteuert ist. Im Gehäuse 31 ist ferner ein Akkupack 35 vorgesehen, der die Versorgungsspannung U_{V} des Elektromotors 1 sowie der Steuereinheit 12 gewährleistet. Der Elektromotor 1 treibt als elektrischer Antriebsmotor über ein nicht näher dargestelltes Ritzel ein Werkzeug 36 an, welches im gezeigten Ausführungsbeispiel eine auf einer Führungsschiene 37 umlaufende Sägekette 38 ist. Der Handschutz 34 kann einen Sensor 39 aufweisen, der das Auslösen des Handschutzes 34 erfasst und ein Ausgangssignal an die Steuereinheit 12 abgibt.

Mit dem erfindungsgemäßen Verfahren kann das Werkzeug 36 in Sekundenbruchteilen stillgesetzt werden.

Wird der Handschutz 34 ausgelöst, wird dieses über den Sensor 39 der Steuereinheit 12 mitgeteilt. Diese schaltet den Antrieb in Sekundenbruchteilen ab und leitet eine elektrische Bremsung des Antriebsmotors ein, in dem in einem ersten Schritt die Phasenanschlüsse einer ersten Feldspule über zugeordnete Schalter (Fig. 1) kurzgeschlossen werden, so dass ein Bremsstrom über die erste Feldspule fließt und die zweite und die dritte Feldspulen als Reihenschaltung parallel zur ersten Feldspule liegen. In einem zweiten Schritt werden die Phasenanschlüsse einer in Drehrichtung des Rotors folgenden zweiten Feldspule über zugeordnete Schalter kurzgeschlossen, so dass nunmehr ein Bremsstrom über die zweite Feldspule fließt und die dritte und die erste Feldspule als Reihenschaltung parallel zur zweiten Feldspule liegen. In einem dritten Schritt werden die Phasenanschlüsse der dritten Feldspule über zugeordnete Schalter kurzgeschlossen, so dass ein Bremsstrom über die dritte Feldspule fließt und die erste und die zweite Feldspulen als Reihenschaltung parallel zur dritten Feldspule liegen. Diese Schritte, also das wiederholte Schalten von Phasenkurzschlüssen über die Phasenanschlüsse U, V und W in einer zeitlichen Abfolge in Abhängigkeit der Drehlage des Rotors wird solange fortgesetzt, bis eine vorgegebene untere Grenzdrehzahl des Rotors erreicht ist oder aber bis der Rotor auf Stillstand abgebremst ist.

In Fig. 14 ist die Bremszeit über der Drehzahl dargestellt. Die obere Linie zeigt die Bremszeit über der Drehzahl im Falle eines "harten Kurzschlusses", d. h., die Phasenanschlüsse U, V und W werden zeitgleich miteinander permanent kurzgeschlossen. Die untere Linie zeigt den erfindungsgemäßen "gesteuerten Kurzschluss", d. h., während der Bremsung werden die Feldspulen, in welchen gerade ein Maximum der Induktionsspannung anliegt, kurzgeschlossen. Damit ergibt sich eine deutliche Absenkung der Bremszeit, was insbesondere aus höheren Drehzahlen von z. B. 10.000 1/min zu einer Reduktion der Bremszeit von fast 50% führt.

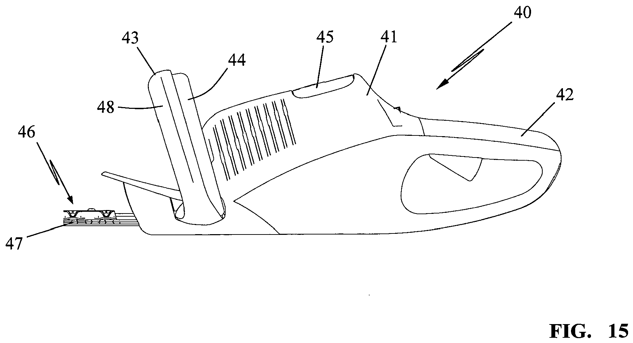

Ein weiteres Ausführungsbeispiel eines tragbaren, handgeführten Arbeitsgerätes ist in Fig. 15 wiedergegeben. Das dort gezeigte Arbeitsgerät ist eine Heckenschere 40 mit einem hinteren Handgriff 42 und einem vorderen Bügelgriff 43, der quer zur Längsrichtung des Arbeitsgerätes liegt. Im Gehäuse 41 der Heckenschere 40 ist ein Akkupack 45 eingeschoben, der in entsprechender Weise, wie zur Motorkettensäge 30 in Fig. 13 beschrieben, einen Antriebsmotor antreibt, der über ein Getriebe das Werkzeug 46 antreibt. Das Werkzeug 46 ist in diesem Ausführungsbeispiel ein Messerbalken 47. Der Bügelgriff 43 besteht aus zwei Teilschalen 44 und 48, die relativ zueinander bewegbar sind. Beim Greifen des Bügelgriffes 43 durch die Hand des Benutzers werden die Teilschalen 44 und 48 aufeinander zu bewegt und schalten einen Kontakt, der das Greifen des Bügelgriffes 43 durch den Benutzer anzeigt. Diese sogenannte Zweihandsicherung stellt sicher, dass der Benutzer nur bei ordnungsgemäßer Griffhaltung die Heckenschere 40 in Betrieb nehmen kann. Wird eine Hand von dem hinteren Handgriff oder dem vorderen Bügelgriff entfernt, schaltet ein entsprechender Kontakt und die Steuereinheit setzt den Motor still, wobei wiederum das erfindungsgemäße Verfahren des gesteuerten Kurzschlusses zum Einsatz kommt. Innerhalb kürzester Bremszeiten kommt das Werkzeug 46 zum Stehen.

Die Feldspulen 3, 4, 5 können direkt kurzgeschlossen werden, um einen maximalen Bremsstrom zu erzielen. Es kann zweckmäßig sein, eine Feldspule über einen Bremswiderstand 50 kurzzuschließen, wie in Fig. 9 gezeigt ist. Durch einen derartigen Bremswiderstand ergibt sich eine Dämpfung oder Begrenzung der auftretenden Kurzschluss-Ströme, was zur elektrischen Schonung der Bauteile zweckmäßig sein kann.

## Patentansprüche

1. Verfahren zum Bremsen eines elektrischen Antriebsmotors aus einem Stator (2) und einem Rotor (9), wobei der Stator (2) des Antriebsmotors über seinen Umfang mit räumlichem Abstand zueinander liegende Feldspulen (3, 4, 5) trägt, die elektrische Phasenanschlüsse (U, V, W) für zumindest drei Motorphasen aufweisen, und zur Erzeugung eines den Rotor (9) antreibenden elektromagnetischen Drehfeldes die Phasenanschlüsse (U, V, W) über elektronische Schalter (H1, H2, H3, L1, L2, L3) an eine Versorgungsspannung (U_{V}) angeschlossen werden, wobei die Schalter (H1, H2, H3, L1, L2, L3) von einer Steuereinheit (12) betätigt sind, die in Abhängigkeit der Drehlage des Rotors (9) die Schalter (H1, H2, H3, L1, L2, L3) schließt, und zum Bremsen eines drehenden Rotors (9) durch Kurzschließen der Phasenanschlüsse (U, V, W) ein Bremsstrom (I_{B}) generiert wird,
**dadurch gekennzeichnet, dass** zum Bremsen des Rotors (9) in vorgegebener zeitlicher Abfolge über die Schalter (H1, H2, H3, L1, L2, L3) jeweils zwischen zwei Phasenanschlüssen (U - V, V - W, W - U) der Feldspulen (3, 4, 5) ein Phasenkurzschluss geschaltet wird und ein weiterer Phasenanschluss (W, U, V) offen bleibt, wobei die über die Schalter (H1, H2, H3, L1, L2, L3) kurzgeschlossenen Phasenanschlüsse (U - V, V - W, W - U) jeweils entsprechend der Drehlage des Rotors (9) ausgewählt werden, derart, dass die Feldspule (3, 4, 5) kurzgeschlossen wird, in der die durch das Magnetfeld (21) des drehenden Rotors (9) generierte Induktionsspannung (U_{I}) ihr Maximum durchläuft.

2. Verfahren nach Anspruch 1,
**dadurch gekennzeichnet, dass** jeweils die Feldspule (3, 4, 5) kurzgeschlossen wird, deren Induktionsspannung (U_{I}) nach 40° bis 70° elektrischer Winkel, insbesondere nach etwa 60° elektrischer Winkel einen Nulldurchgang (N) durchlaufen hat.

3. Verfahren nach Anspruch 1 oder 2,
**dadurch gekennzeichnet, dass** die Umschaltung von einem ersten Phasenkurzschluss auf einen nächsten Phasenkurzschluss nach jeweils 60° des elektrischen Winkels erfolgt.

4. Verfahren nach einem der Ansprüche 1 bis 3,
**dadurch gekennzeichnet, dass** die Feldspulen (3, 4, 5) zur Erzeugung eines Drehfeldes in einem Dreiphasenmotor miteinander verbunden werden.

5. Verfahren nach Anspruch 4,
**gekennzeichnet durch** eine Folge der nachfolgenden Verfahrensschritte:
- in einem ersten Schritt werden die Phasenanschlüsse (U, V) einer ersten Feldspule (5) über zugeordnete Schalter (H1, H2, L1, L2) kurzgeschlossen, so dass ein Bremsstrom (I_{B}) über die erste Feldspule (5) fließt und die zweite und die dritte Feldspulen (3, 4) als Reihenschaltung parallel zur ersten Feldspule (5) liegen,
- in einem zweiten Schritt werden die Phasenanschlüsse (V, W) einer entgegen der mechanischen Drehrichtung (20) des Rotors (9) folgenden, zweiten Feldspule (3) über zugeordnete Schalter (H1, H3, L1, L3) kurzgeschlossen, so dass ein Bremsstrom (I_{B}) über die zweite Feldspule (3) fließt und die dritte und die erste Feldspulen (4, 5) als Reihenschaltung parallel zur zweiten Feldspule (3) liegen,
- in einem dritten Schritt werden die Phasenanschlüsse (W, U) der entgegen der mechanischen Drehrichtung (20) des Rotors (9) folgenden, dritten Feldspule (4) über zugeordnete Schalter (H2, H3, L2, L3) kurzgeschlossen, so dass ein Bremsstrom (I_{B}) über die dritte Feldspule (4) fließt und die erste und die zweite Feldspulen (3, 5) als Reihenschaltung parallel zur dritten Feldspule (4) liegen,
- und Wiederholen des Schaltens der Phasenkurzschlüsse in einer zeitlichen Abfolge in Abhängigkeit der Drehlage des Rotors (9) bis eine vorgegebene untere Grenzdrehzahl des Rotors (9) erreicht ist.

6. Verfahren nach einem der Ansprüche 1 bis 5,
**dadurch gekennzeichnet, dass** über eine elektrische Umdrehung des Rotors (9) jede Feldspule (3, 4, 5) zweimal kurzgeschlossen wird.

7. Verfahren nach Anspruch 6,
**dadurch gekennzeichnet, dass** der Phasenanschluss (U, V, W) einer Feldspule (3, 4, 5) über Schalter (H1, H2, H3) zur High Side einer Versorgungsspannung (Uv) und über Schalter (L1, L2, L3) zur Low Side der Versorgungsspannung (U_{V}) verbunden werden, wobei über eine elektrische Umdrehung des Rotors (9) die Phasenanschlüsse (U, V, W) einer Feldspule (3, 4, 5) einmal über die Schalter der Low Side (L1, L2, L3) und einmal über die Schalter der High Side (H1, H2, H3) kurzgeschlossen werden.

8. Verfahren nach Anspruch 7,
**dadurch gekennzeichnet, dass** zum Abbremsen des Rotors (9) eine Feldspule (3, 4, 5) bei einem ersten Kurzschließen über die Schalter (H1, H2, H3) der High-Side und bei einem folgenden Kurzschließen über die Schalter (L1, L2, L3) der Low-Side kurzgeschlossen werden.

9. Verfahren nach einem der Ansprüche 1 bis 8,
**dadurch gekennzeichnet, dass** die Feldspulen (3, 4, 5) elektrisch in einer Dreieckschaltung (6) verbunden werden und zwischen zwei Feldspulen (3, 4, 5) jeweils ein Phasenanschluss (U, V, W) liegt, derart, dass bei einem Phasenkurzschluss eine erste Feldspule (3, 4, 5) elektrisch parallel zu einer Reihenschaltung der weiteren Feldspulen (4, 5; 3, 5; 3, 4) liegt.

10. Verfahren nach einem der Ansprüche 1 bis 9,
**dadurch gekennzeichnet, dass** der Rotor (9) bis auf Stillstand abgebremst wird.

11. Verfahren nach einem der Ansprüche 1 bis 10,
**dadurch gekennzeichnet, dass** die Drehlage des Rotors (9) über Sensoren festgestellt wird, insbesondere über Hallsensoren (17, 18, 19).

12. Verfahren nach einem der Ansprüche 1 bis 10,
**dadurch gekennzeichnet, dass** die Drehlage des Rotors (9) sensorlos festgestellt wird, insbesondere über die Größe und/oder den Verlauf der in den Feldspulen (3, 4, 5) induzierten elektrischen Spannung (U₃, U₄, U₅,) oder den induzierten elektrischen Strom festgestellt wird.

13. Arbeitsgerät mit einem elektrischen Antriebsmotor für ein Werkzeug,
**gekennzeichnet durch** die Verwendung des Verfahrens nach Anspruch 1 als Sicherheitsbremseinrichtung zum Stillsetzen des das Werkzeug (36, 46) antreibenden Antriebsmotors.

14. Arbeitsgerät nach Anspruch 13,
**dadurch gekennzeichnet, dass** das Arbeitsgerät ein handgeführtes, tragbares Arbeitsgerät ist, vorzugsweise eine Motorkettensäge (30), eine Heckenschere (40) oder ein Trennschleifer.

## Claims

1. Method for braking an electric drive motor having a stator (2) and a rotor (9), wherein the stator (2) of the drive motor carries field coils (3, 4, 5) lying spaced apart from each other around its circumference, which have electric phase terminals (U, V, W) for at least three motor phases, and, in order to generate a rotating electromagnetic field that drives the rotor (9), the phase terminals (U, V, W) are connected via electronic switches (H1, H2, H3, L1, L2, L3) to a supply voltage (Uᵥ), wherein the switches (H1, H2, H3, L1, L2, L3) are activated by a control unit (12), which closes the switches (H1, H2, H3, L1, L2, L3) as a function of the rotational position of the rotor (9), and, in order to brake a rotating rotor (9), by shorting the phase terminals (U, V, W), a braking current (I_{B}) is generated,
**characterised in that**, in order to brake the rotor (9) in a predetermined time sequence via the switches (H1, H2, H3, L1, L2, L3), a phase short circuit is connected between two respective phase terminals (U-V, V-W, W-U) of the field coils (3, 4, 5) and a further phase terminal (W, U, V) remains open, wherein the phase terminals (U-V, V-W, W-U) that are shorted via the switches (H1, H2, H3, L1, L2, L3) are each selected corresponding to the rotational position of the rotor (9) in such a way that the field coil (3, 4, 5), in which the induction voltage (U_{I}) generated by the magnetic field (21) of the rotating rotor (9) passes through its maximum, is shorted.

2. Method according to claim 1,
**characterised in that** each field coil (3, 4, 5), of which the induction voltage (U_{I}) has passed through a zero crossing (N) after 40° to 70° electrical angle, in particular after approximately 60° electrical angle, is shorted.

3. Method according to claim 1 or 2,
**characterised in that** the switchover from a first phase short circuit to a next phase short circuit takes place in each case after 60° of the electrical angle.

4. Method according to one of claims 1 to 3,
**characterised in that** the field coils (3, 4, 5) are connected to each other to generate a rotating field in a three-phase motor.

5. Method according to claim 4,
**characterised by** a sequence of the following method steps:
- in a first step, the phase terminals (U, V) of a first field coil (5) are shorted via assigned switches (H1, H2, L1, L2), so that a braking current (I_{B}) flows via the first field coil (5), and the second and the third field coils (3, 4) lie as a serial connection parallel to the first field coil (5);
- in a second step, the phase terminals (V, W) of a second field coil (3), following counter to the mechanical rotating direction (20) of the rotor (9), are shorted via assigned switches (H1, H3, L1, L3) so that a braking current (I_{B}) flows via the second field coil (3), and the third and the first field coils (4, 5) lie as a serial connection parallel to the second field coil (3);
- in a third step, the phase terminals (W, U) of the third field coil (4), following counter to the mechanical rotating direction (20) of the rotor (9), are shorted via assigned switches (H2, H3, L2, L3) so that a braking current (I_{B}) flows via the third field coil (4), and the first and the second field coils (3, 5) lie as a serial connection parallel to the third field coil (4);
- and repeating the connection of the phase short circuits in a time sequence as a function of the rotational position of the rotor (9) until a predetermined lower threshold speed of the rotor (9) is reached.

6. Method according to one of claims 1 to 5,
**characterised in that** each field coil (3, 4, 5) is shorted twice over an electric rotation of the rotor (9).

7. Method according to claim 6,
**characterised in that** the phase terminal (U, V, W) of a field coil (3, 4, 5) is connected via switches (H1, H2, H3) on the high side of a supply voltage (Uv) and via switches (L1, L2, L3) on the low side of the supply voltage (Uv), wherein, over an electric rotation of the rotor (9), the phase terminals (U, V, W) of a field coil (3, 4, 5) are shorted once via the switches of the low side (L1, L2, L3) and once via the switches of the high side (H1, H2, H3).

8. Method according to claim 7,
**characterised in that**, in order to decelerate the rotor (9), a field coil (3, 4, 5) is shorted, in the case of a first short-circuiting, via the switches (H1, H2, H3) of the high side and, in the case of a subsequent short-circuiting, via the switches (L1, L2, L3) of the low side.

9. Method according to one of claims 1 to 8,
**characterised in that** the field coils (3, 4, 5) are electrically connected in a delta connection (6), and a respective phase terminal (U, V, W) lies between two field coils (3, 4, 5) in such a way that, in the event of a phase short circuit, a first field coil (3, 4, 5) lies electrically parallel to a serial connection of the further field coils (4, 5; 3, 5; 3, 4).

10. Method according to one of claims 1 to 9,
**characterised in that** the rotor (9) is decelerated to a standstill.

11. Method according to one of claims 1 to 10,
**characterised in that** the rotational position of the rotor (9) is determined via sensors, in particular via Hall sensors (17, 18, 19).

12. Method according to one of claims 1 to 10,
**characterised in that** the rotational position of the rotor (9) is determined without a sensor, in particular via the magnitude and / or the progression of the electrical voltage (U₃, U₄, U₅) induced in the field coils (3, 4, 5) or the induced electric current.

13. Work device having an electric drive motor for a tool,
**characterised by** the use of the method according to claim 1 as a safety braking means for stopping the drive motor driving the tool (36, 46).

14. Work device according to claim 13,
**characterised in that** the work device is a hand-held, portable work device, preferably a motorised chainsaw (30), a hedge trimmer (40) or an angle grinder.

## Revendications

1. Procédé pour le freinage d'un moteur d'entraînement électrique composé d'un stator (2) et d'un rotor (9), le stator (2) du moteur d'entraînement comportant, espacées dans l'espace sur sa circonférence, des bobines de champ (3, 4, 5) qui présentent des raccordements de phase électriques (U, V, W) pour au moins trois phases de moteur, et pour générer un champ électromagnétique tournant qui entraîne le rotor (9) les raccordements de phase (U, V, W) étant raccordés par l'intermédiaire de commutateurs électroniques (H1, H2, H3, L1, L2, L3) à une tension d'alimentation (U_{V}), les commutateurs (H1, H2, H3, L1, L2, L3) étant actionnés par une unité de commande (12) qui les ferme en fonction de la position de rotation du rotor (9), et un courant de freinage (I_{B}) étant généré pour freiner un rotor (9) en rotation par court-circuit des raccordements de phase (U, V, W),
**caractérisé en ce que** pour freiner le rotor (9), entre deux raccordements de phase (U-V, V-W, W-U) des bobines de champ (3, 4, 5) un court-circuit de phase est prévu par l'intermédiaire des commutateurs (H1, H2, H3, L1, L2, L3) suivant une succession dans le temps prédéfinie, et un autre raccordement de phase (W, U, V) reste ouvert, les raccordements de phase (U-V, V-W, W-U) court-circuités par l'intermédiaire des commutateurs (H1, H2, H3, L1, L2, L3) étant sélectionnés en fonction de la position de rotation du rotor (9), de telle sorte que la bobine de champ (3, 4, 5) qui est court-circuitée est celle dans laquelle la tension d'induction (U₁) générée par le champ magnétique (21) du rotor (9) en rotation passe par son maximum.

2. Procédé selon la revendication 1,
**caractérisé en ce que** la bobine de champ (3, 4, 5) qui est court-circuitée est celle dont la tension d'induction (U₁) est passée par un point zéro (N) après un angle électrique de 40° à 70°, en particulier d'environ 60°.

3. Procédé selon la revendication 1 ou 2,
**caractérisé en ce que** le passage d'un premier court-circuit de phase à un court-circuit de phase suivant a lieu à chaque fois après 60° d'angle électrique.

4. Procédé selon l'une des revendications 1 à 3,
**caractérisé en ce que** les bobines de champ (3 4, 5) pour produire un champ tournant dans un moteur triphasé sont reliées entre elles.

5. Procédé selon la revendication 4,
**caractérisé par** une suite des étapes de procédé suivantes:
- lors d'une première étape, les raccordements de phase (U, V) d'une première bobine de champ (5) sont court-circuités par l'intermédiaire de commutateurs (H1, H2, L1, L2) associés, de sorte qu'un courant de freinage (I_{B}) passe par la première bobine de champ (5) et que les deuxième et troisième bobines de champ (3, 4) sont parallèles à la première bobine de champ (5), sous la forme d'un montage en série,
- lors d'une deuxième étape, les raccordements de phase (V, W) d'une deuxième bobine de champ (3) suivante, en sens inverse par rapport au sens de rotation mécanique (20) du rotor (9), sont court-circuités par l'intermédiaire de commutateurs (H1, H3, L1, L3) associés, de sorte qu'un courant de freinage (I_{B}) passe par la deuxième bobine de champ (3) et que les troisième et première bobines de champ (4, 5) sont parallèles à la deuxième bobine de champ (3), sous la forme d'un montage en série,
- lors d'une troisième étape, les raccordements de phase (W, U) de la troisième bobine de champ (4) suivante, en sens inverse par rapport au sens de rotation mécanique (20) du rotor (9), sont court-circuités par l'intermédiaire de commutateurs (H2, H3, L2, L3) associés, de sorte qu'un courant de freinage (I_{B}) passe par la troisième bobine de champ (4) et que les première et deuxième bobines de champ (3, 5) sont parallèles à la troisième bobine de champ (4), sous la forme d'un montage en série,
- et répétition de la commutation des courts-circuits de phase suivant une succession dans le temps en fonction de la position de rotation du rotor (9), jusqu'à ce qu'une vitesse de rotation limite inférieure prédéfinie du rotor (9) soit atteinte.

6. Procédé selon l'une des revendications 1 à 5,
**caractérisé en ce que** par l'intermédiaire d'un tour électrique du rotor (9), chaque bobine de champ (3, 4, 5) est court-circuitée deux fois.

7. Procédé selon la revendication 6,
**caractérisé en ce que** le raccordement de phase (U, V, W) d'une bobine de champ (3, 4, 5) est relié par l'intermédiaire des commutateurs (H1, H2, H3) au côté haut d'une tension d'alimentation (Uv), et par l'intermédiaire des commutateurs (L1, L2, L3) au côté bas d'une tension d'alimentation (U_{V}), les raccordements de phase (U, V, W) d'une bobine de champ (3, 4, 5) étant court-circuités, grâce à un tour électrique du rotor (9), une fois par l'intermédiaire des commutateurs du côté à bas potentiel (L1, L2, L3) et une fois par l'intermédiaire des commutateurs du côté à haut potentiel (H1, H2, H3).

8. Procédé selon la revendication 7,
**caractérisé en ce que** pour freiner le rotor (9), une bobine de champ (3, 4, 5) est court-circuitée lors d'un premier court-circuit par l'intermédiaire des commutateurs (H1, H2, H3) du côté haut, et lors d'un court-circuit suivant par l'intermédiaire des commutateurs (L1, L2, L3) du côté bas.

9. Procédé selon l'une des revendications 1 à 8,
**caractérisé en ce que** les bobines de champ (3, 4, 5) sont reliées électriquement dans un montage en triangle (6), et entre deux bobines de champ (3, 4, 5) se trouve un raccordement de phase (U, V, W), de telle sorte que lors d'un court-circuit de phase une première bobine de champ (3, 4, 5) est parallèle électriquement à un montage en série des autres bobines de champ (4, 5 ; 3, 5 ; 3, 4).

10. Procédé selon l'une des revendications 1 à 9,
**caractérisé en ce que** le rotor (9) est freiné jusqu'à l'arrêt.

11. Procédé selon l'une des revendications 1 à 10,
**caractérisé en ce que** la position de rotation du rotor (9) est constatée par l'intermédiaire de capteurs, en particulier des capteurs à effet Hall (17, 18, 19).

12. Procédé selon l'une des revendications 1 à 10,
**caractérisé en ce que** la position du rotor (9) est constatée sans capteur, en particulier par l'intermédiaire de la taille et/ou de la courbe de la tension électrique (U₃, U₄, U₅) induite dans les bobines de champ (3, 4, 5) ou du courant électrique induit.

13. Appareil avec un moteur d'entraînement électrique pour un outil,
**caractérisé par** l'utilisation du procédé selon la revendication 1 comme dispositif de freinage de sécurité pour arrêter le moteur d'entraînement qui entraîne l'outil (36, 46).

14. Appareil selon la revendication 13,
**caractérisé en ce que** l'appareil est un appareil portatif tenu à la main, de préférence une tronçonneuse à chaîne (30), un taille-haie (40) ou une tronçonneuse à meule.
